# EUROPÄISCHE PATENTSCHRIFT

(11) **EP 3 044 141 B1**
(45) Veröffentlichungstag und Bekanntmachung des Hinweises auf die Patenterteilung: **16.01.2019**
(21) Anmeldenummer: 14783555.7
(22) Anmeldetag: 15.09.2014
(51) Int. Cl.: B65G 67/08

(54) **VORRICHTUNG ZUM BELADEN VON LADEFLÄCHEN**
APPARATUS FOR LOADING ONTO LOADING AREAS
DISPOSITIF PERMETTANT DE CHARGER DES PLATEFORMES DE CHARGEMENT

(30) Priorität: 13.09.2013 DE 102013015133
(43) Veröffentlichungstag der Anmeldung: 20.07.2016
(73) Patentinhaber: Haver & Boecker OHG, 59302 Oelde (DE)
(72) Erfinder: OHLMEYER, Claus, 48163 Münster (DE)
(74) Vertreter: BSB Patentanwälte Schütte & Engelen Partnerschaft mbB
(86) Internationale Anmeldenummer: PCT/EP2014/069634
(87) Internationale Veröffentlichungsnummer: WO 2015/036597

(56) Entgegenhaltungen:
- WO-A1-88/02346
- DE-A1- 2 231 495
- DE-A1- 2 713 135
- JP-A- H02 175 520
- JP-U- S5 848 635
- US-A- 4 701 091
- US-A- 5 718 325

## Beschreibung

Die vorliegende Erfindung betrifft eine Vorrichtung zum Beladen von Ladeflächen von Transportmitteln mit Säcken oder anderen Stückgütern. Neben der Beladung von LKW mit Säcken ist auch die Beladung von z.B. Eisenbahnwaggons oder Schiffen möglich.

Obwohl die Erfindung nicht darauf beschränkt ist, so ist sie insbesondere für den Einsatz bei der Beladung von LKW oder dgl. mit Säcken geeignet, die mit Schüttgütern gefüllt sind. Bei der Abfüllung von Zement in Säcke werden oftmals rotierende Packmaschinen eingesetzt, die über 6, 8, 12 oder sogar 16 Füllstutzen verfügen. Bei der Rotation der Packmaschine werden von Hand oder automatisch Säcke auf die Füllstutzen aufgeschoben bzw. aufgeschossen, während einer Umdrehung gefüllt und schließlich automatisiert abgeworfen. Die abgeworfenen Säcke werden gegebenenfalls hinsichtlich ihres Gewichtes noch einmal überprüft und über Transportbänder zu einer Vorrichtung zum Beladen von Transportmitteln mit den abgefüllten Säcken transportiert.

Wenn eine solche Packmaschine beispielsweise 3000 Säcke/Stunde mit jeweils 50 kg Zement füllt, so muss auch die nachgeordnete Verarbeitungslinie zum Beladen von 3000 Säcken/Stunde geeignet sein. Um einen möglichst reibungsfreien Betrieb zu gewährleisten, ist es dabei von erheblichem Vorteil, wenn die Packmaschine kontinuierlich durchlaufen kann, auch wenn die Vorrichtung zum Beladen von Ladeflächen von beispielsweise LKW eine Lage von Säcken abgelegt hat und nun höhenverstellt werden muss, um die nächste Lage zu formen und abzulegen. Bei einer solchen Höhenverstellung des Beladekopfes einer Vorrichtung zum Beladen entsteht ein kleiner Zeitverzug von beispielsweise 2 oder 3 Sekunden. Bei einer Verarbeitungsgeschwindigkeit von 3000 Säcken pro Stunde werden in dieser doch relativ kurzen Zeit dennoch etwa 2 Säcke oder 3 Säcke antransportiert, die zwischengepuffert werden müssen, um einen kontinuierlichen Betrieb der Packmaschine zu ermöglichen.

Die Säcke werden oberhalb des LKW zugeführt und über einen höhenverstellbaren Ladekopf auf der Ladefläche des Transportmittels abgelegt. Dabei wird meist eine Lage mehrerer Säcke gleichzeitig abgelegt und anschließend der Beladekopf höhenverstellt, während gleichzeitig das nächste Lagenbild vorpositioniert wird. Anschließend wird das neue Lagenbild in der höheren Abgabehöhe auf das zuvor abgelegte Lagenbild gelegt. So werden nacheinander so viele Lagen aufeinandergelegt, wie gewünscht bzw. das Transportmittel aufnehmen oder transportieren kann.

Zur Überwindung der Höhendifferenz zwischen der Zuführeinrichtung und dem Beladekopf ist zwischen dem Beladekopf und der Zuführeinrichtung eine Transportpuffereinrichtung vorgesehen, die je nach Höhe des Beladekopfes eine unterschiedliche Höhendifferenz überbrücken muss.

Im Stand der Technik ist mit der DE 2 231 495 A eine Anlage zum selbsttätigen Beladen von Ladeflächen von offenen und geschlossenen Lastkraftwagen mit Säcken bekannt geworden. Bei dieser bekannten Anlage wird der Beladekopf an einem Hubgestell gehalten, welches zwei oder in neuerer Zeit vier Hubstangen umfasst. Der Beladekopf ist an senkrechten Hubstangen angeordnet. Dadurch wird sichergestellt, dass auch bei einer Höhenverstellung des Beladekopfes kein Längs- oder Seitenversatz des Beladekopfes erfolgt. Dieser Stand der Technik funktioniert und wird weithin eingesetzt. Nachteilig an dieser bekannten Beladevorrichtung ist aber der relativ hohe Aufwand, da mehrere Linearführungen und Motoren zur Höhenverstellung des Beladekopfes vorgesehen sind. Die Motoren müssen gekoppelt betrieben werden. Die Anlage nimmt insgesamt eine beträchtliche Höhe ein, da die Linearführungen sehr weit nach oben bewegt werden müssen und fast die doppelte Arbeitshöhe erreichen können. Dadurch wird sehr viel und teurer Bauraum benötigt. Außerdem erfolgt bei einer realen Ausführung der Antrieb über einen Kettentrieb, der bei der Zementabfüllung aufgrund der staubhaltigen Umgebung einem erhöhten Verschleiß unterliegt.

Die US 4,701,091 offenbart eine Vorrichtung zum Beladen von Ladeflächen nach dem Oberbegriff des Anspruchs 1. Aus der US 4,701,091 ist eine Vorrichtung zur Beladung von LKW an Laderampen bekannt geworden, bei denen die LKW rückwärts an die Rampe heranfahren und von hinten mit einem Förderer auf die Ladefläche des LKW transportiert werden. Nachteilig daran ist, dass die LKW rückwärts an die Laderampe heranfahren müssen.

Mit der DE 2 713 135 A1 ist danach eine Vorrichtung zum selbsttätigen Verladen von Säcken mit einem von einer Absackmaschine herfördernden Zubringer-Förderband bekannt geworden, wobei ein höhenverstellbarer Beladekopf eingesetzt wird, der mehrere nacheinander antransportierte Säcke zu einem Lagenbild von z. B. fünf Säcken vorformiert und als Einzelschicht auf der Ladefläche eines LKW oder eines Waggons ablegt. Im Anschluss daran wird der höhenverstellbar gehaltene Beladekopf um die einer Lagenhöhe entsprechende Höhe hochgezogen und es wird eine zweite Lage auf der ersten Lage abgelegt. Eine solche Vorrichtung funktioniert grundsätzlich. Die Höhenverstellung ist erheblich einfacher und konstruktiv nicht so aufwendig, da der Beladekopf an einem Seil gehalten und höhenverstellt wird. Mehrere teleskopierbare Linearführungen und zugehörige Antriebe werden nicht benötigt. Es hat sich aber herausgestellt, dass bei der Höhenverstellung des Beladekopfes es durch das flexible Seil nicht nur zu einer Höhenverstellung des Beladekopfes kommt, sondern auch zu einem Längsversatz, da bei der Höhenverstellung keine um den oberen Gelenkpunkt des geneigten Doppelbandes Linearbewegung, sondern eine Drehbewegung durchgeführt wird. Das führt dazu, dass die Säcke nicht ideal übereinander gestapelt werden, sondern leicht versetzt auf einer Kreisbogenform abgelegt werden. Dadurch wird auf der Ladefläche mehr Volumen für die Säcke benötigt. Außerdem ist die Stabilität der Sackstapel geringer, da die Positionierung ungenau ist. Insbesondere bei Fahrten von LKW über mit Schlaglöchern versehenen Straßen kann es somit vermehrt zu einer Bewegung der Säcke kommen. Dabei kann die gesamte Ladung verrutschen. Deshalb hat sich diese Variante am Markt nicht durchgesetzt.

Es ist deshalb die Aufgabe der vorliegenden Erfindung eine andere Vorrichtung zum Beladen von Ladeflächen von Transportmitteln mit Säcken oder anderen Stückgütern zur Verfügung zu stellen, bei welcher mit geringerem Aufwand eine genaue Positionierung des Beladekopfes und somit der Säcke möglich ist.

Diese Aufgabe wird durch eine Vorrichtung mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus dem Ausführungsbeispiel sowie der allgemeinen Beschreibung.

Eine erfindungsgemäße Vorrichtung zum Beladen von Ladeflächen von Transportmitteln mit Säcken oder anderen Stückgütern umfasst eine längsbewegliche Beladeeinrichtung oder wird durch eine längsbewegliche Beladeeinrichtung gebildet. Die Beladeeinrichtung umfasst eine Zuführeinrichtung zum Antransport von Säcken, einen mit einer Fahreinrichtung höhenverstellbar verbundenen Beladekopf und eine Transportpuffereinrichtung zwischen der Zuführeinrichtung und dem Beladekopf. Dabei verbindet die Transportpuffereinrichtung den Beladekopf und die Zuführeinrichtung miteinander. Der Beladekopf ist an der längsbeweglichen Fahreinrichtung über ein flexibles Element höhenverstellbar angeordnet und die Fahreinrichtung ist mit der Transportpuffereinrichtung über eine Koppeleinrichtung gekoppelt, um die Höhe des Beladekopfes einzustellen, sodass sich die Zuführeinrichtung bei einer Höhenverstellung des Beladekopfes in Längsrichtung bewegt und der Beladekopf vollständig in Längsrichtung ortsfest verbleibt. Bei einer Höhenverstellung des Beladekopfes bewegt sich dabei die Zuführeinrichtung in Längsrichtung erheblich mehr als der Beladekopf. Die Transportpuffereinrichtung weist eine parallelogrammartige Tragkonstruktion auf und ist in einem mittleren Bereich der Tragkonstruktion an die parallelogrammartige Tragkonstruktion gekoppelt. Die parallelogrammartige Tragkonstruktion weist einen ersten Anschlussrahmen auf, der an die Zuführeinrichtung grenzt, und weist einen zweiten Anschlussrahmen auf, der an den Beladekopf angrenzt. Die Anschlussrahmen sind über einen unteren Längsverbinder und einen oberen Längsverbinder gelenkig miteinander verbunden.

Die erfindungsgemäße Vorrichtung hat viele Vorteile. Ein Vorteil ist, dass der Beladekopf nur über ein einziges flexibles Element höhenverstellbar gehalten werden kann. Ein ganz erheblicher Vorteil besteht darin, dass der Beladekopf dennoch ohne Längsversatz höhenverstellt werden kann. Das wird durch die Koppeleinrichtung gewährleistet, die eine Bewegung der Zuführeinrichtung in Längsrichtung bei einer Höhenverstellung des Beladekopfes bewirkt, sodass der Beladekopf in horizontaler Richtung ortsfest verbleibt, auch wenn eine Schwenkbewegung des Beladekopfes erfolgt. Es wird nur eine geringe Bauhöhe benötigt, da aufwendige Linearführungen und Hubstangen nicht benötigt werden, die aus einer abgesenkten Position in eine höhere Beladeposition verfahren werden. Insgesamt kann deshalb eine genaue Lagenbildung und genaue Stapelung der einzelnen Säcke gewährleistet werden, während gleichzeitig nur ein geringer Bauraum benötigt wird. Weiterhin ist die erfindungsgemäße Vorrichtung einfach und kostengünstig aufgebaut. Außerdem ist ein sehr robuster Aufbau möglich.

Die erfindungsgemäße Beladeeinrichtung bewirkt, dass bei einem Hochziehen des Beladekopfes an dem flexiblen Element sich die auf eine horizontale Ebene projizierte Länge der Transportpuffereinrichtung vergrößert, da der Neigungswinkel abnimmt. Durch die Koppeleinrichtung wird bewirkt, dass sich die Zuführeinrichtung von der Fahreinrichtung um die veränderte projizierte Länge weg bewegt, sodass der Beladekopf in horizontaler Richtung ortsfest verbleibt bzw. in vertikaler Richtung linear angehoben wird. Im beschriebenen Stand der Technik, wo der Beladekopf an einem Seil höhenverstellbar gehalten wird, ergibt sich hingegen ohne die Koppeleinrichtung ein statisch unbestimmter Zustand, der jedenfalls zu einer Auslenkung des Beladekopfes in horizontaler Richtung führt, sodass die gestapelten Säcke nicht korrekt übereinander gelegt werden können.

Obwohl es möglich ist, dass der Beladekopf an nur einem einzigen Seil als flexibles Element aufgehangen wird, ist es bevorzugt, dass wenigstens zwei flexible Elemente den Beladekopf halten. Das erhöht die Sicherheit.

In bevorzugten Weiterbildungen ist die Koppeleinrichtung schwenkbar an der Fahreinrichtung und/oder der Transportpuffereinrichtung befestigt. Dabei ist es möglich, dass die Koppeleinrichtung über entsprechende Schwenkgelenke schwenkbar an den einzelnen Komponenten befestigt ist. Möglich ist es aber auch, dass an oder in der Nähe des Befestigungspunktes der Koppeleinrichtung mit der Fahreinrichtung und/oder der Transportpuffereinrichtung eine Art von Schwenkgelenk angeordnet ist, welches über eine elastische Verformung eine Schwenkbewegung der Schwenkeinrichtung ermöglicht.

Besonders bevorzugt weist die Koppeleinrichtung wenigstens eine Koppelstange auf. In bevorzugten Ausgestaltungen sind wenigstens zwei Koppelstangen vorgesehen.

In vorteilhaften Ausgestaltungen beeinflusst eine Höhe des Beladekopfes eine Neigung der Transportpuffereinrichtung. Dabei ist es bevorzugt, dass die Höhe des Beladekopfes die Neigung der Transportpuffereinrichtung definiert bzw. dass sich die Neigung der Transportpuffereinrichtung durch die Höhe des Beladekopfes ergibt. In entsprechender Weise beeinflusst die Höhe des Beladekopfes auch eine gesamte Länge der Beladeeinrichtung von dem Beginn der Zuführeinrichtung zu dem Ende des Beladekopfes.

Die Transportpuffereinrichtung weist eine parallelogrammartige Tragkonstruktion auf. Die parallelogrammartige Tragkonstruktion umfasst dabei einen oberen und einen unteren Längsverbinder und einen ersten und einen zweiten Anschlussrahmen. Dabei sind die Längsverbinder und die Anschlussrahmen gelenkig miteinander verbunden. Dadurch entsteht die parallelogrammartige Tragkonstruktion. Dabei ist an dem ersten Anschlussrahmen der obere Längsverbinder gelenkig angeordnet. Unterhalb des oberen Längsverbinders ist der untere Längsverbinder an den ersten Anschlussrahmen gelenkig angeschlossen. Der obere Längsverbinder ist mit dem zweiten Anschlussrahmen gelenkig verbunden. Der untere Längsverbinder ist unterhalb des oberen Längsverbinders mit dem zweiten Anschlussrahmen gelenkig verbunden. Eine solche Konstruktion ermöglicht eine Höhenverschwenkung des zweiten Anschlussrahmens gegenüber dem ersten Anschlussrahmen, wobei der zweite Anschlussrahmen seine (insbesondere senkrechte) Orientierung beibehält. Die parallelogrammartige Konstruktion erlaubt es, den Beladekopf mit dem zweiten Anschlussrahmen zu verbinden, sodass sich bei einer Höhenverstellung des Beladekopfes dessen horizontale Orientierung nicht verändert.

Die Koppeleinrichtung ist in einem mittleren Bereich der Tragkonstruktion an die parallelogrammartige Tragkonstruktion gekoppelt. Insbesondere ist die Koppeleinrichtung mit einem der Längsverbinder gekoppelt. Das bedeutet, dass die Koppeleinrichtung direkt mit dem Längsverbinder gekoppelt sein kann. Möglich ist es aber auch, dass die Koppeleinrichtung an beispielsweise eine Querstange angeschlossen ist, die wiederum mit dem Längsverbinder verbunden ist.

Insbesondere liegt die Koppelstelle der Koppeleinrichtung mit dem Längsverbinder in Längsrichtung der Tragkonstruktion in einem Bereich zwischen etwa einem Drittel und zwei Dritteln der Länge. Vorzugsweise ist der Koppelpunkt der Koppeleinrichtung an den Längsverbinder etwa in der Mitte der Länge der parallelogrammartigen Tragkonstruktion. Dabei wird als Mitte ein Bereich angesehen, der sich um den exakten Mittelpunkt um ± 5 % oder ± 10 % herum erstreckt. Besonders bevorzugt ist die Mitte der Längserstreckung der Tragkonstruktion, wobei geringe Abweichungen von 1% oder 2% möglich sind.

Vorzugsweise beträgt eine Länge der Koppeleinrichtung und/oder der Koppelstange der Koppeleinrichtung zwischen etwa 40 % und 60 % der Länge der parallelogrammartigen Tragkonstruktion. Insbesondere beträgt die Länge der Koppeleinrichtung die Hälfte der Länge der parallelogrammartigen Tragkonstruktion, wobei wieder Toleranzen von ± 10 % und vorzugsweise ± 5 % möglich sind.

Eine Konstruktion, bei der die Länge der Koppeleinrichtung der Hälfte der Länge der parallelogrammartigen Tragkonstruktion entspricht und bei der die Koppeleinrichtung in der Mitte der parallelogrammartigen Tragkonstruktion an diese gekoppelt ist, ermöglicht eine besonders zuverlässige und sichere Funktion. Dabei wird bei einer Höhenverstellung des Beladekopfes der Ort des Beladekopfes in Längsrichtung gar nicht verändert, während die Zuführeinrichtung in Längsrichtung verstellt wird. Bei geringeren Abweichungen des Ankoppelungspunktes der Koppeleinrichtung an die Tragkonstruktion oder der Länge der Koppeleinrichtung erfolgt eine sehr leichte Längsbewegung des Beladekopfes, die aber in einem sehr weiten Rahmen erheblich kleiner bleibt, als ohne Koppeleinrichtung. Insbesondere dann, wenn die Fahreinrichtung gebremst oder festgesetzt wird. Die Bewegung des Beladekopfes, der Koppeleinrichtung und der Fahreinrichtung können in Abhängigkeit von den einzelnen Längen und dem Koppelpunkt der Koppeleinrichtung mit der Transportpuffereinrichtung mathematisch berechnet werden.

In bevorzugten Weiterbildungen ist an der parallelogrammartigen Tragkonstruktion wenigstens ein Transportband aufgenommen. Ein solches Transportband ermöglicht auch bei unterschiedlichen Neigungswinkeln der Transportpuffereinrichtung einen zuverlässigen Weitertransport der zu verladenen Säcke. Eine Mindestneigung der Transportpuffereinrichtung für einen eigenständigen Transport über Schwerkraft oder dergleichen muss nicht eingehalten werden. Die Transportpuffereinrichtung ist besonders bevorzugt linear gestreckt ausgebildet und weist insgesamt einen variablen Neigungswinkel auf. Es ist nicht nötig, einen separaten Bereich mit erhöhter Neigung vorzusehen, damit eine Mindestneigung eingehalten wird.

In allen Ausgestaltungen ist es bevorzugt, dass die Transportpuffereinrichtung in Förderrichtung zwischen der Zuführeinrichtung und dem Beladekopf angeordnet ist. Die Transportpuffereinrichtung bildet dabei das Bindeglied zwischen den der Zuführeinrichtung zugeführten Säcken und dem Beladekopf, wo die Säcke dem Transportmittel übergeben werden.

Vorzugsweise weist die Fahreinrichtung ein Hubwerk mit wenigstens einer Seilrolle und wenigstens einem Hubmotor auf. Aus beispielsweise Sicherheitsgründen ist es möglich und bevorzugt, dass zwei Seile vorgesehen sind, die dann vorzugsweise auf jeweils einer eigenen Seilrolle aufgewickelt werden.

Die Fahreinrichtung weist einen Antrieb zur Längsbewegung auf. Es ist ebenso bevorzugt, dass die Fahreinrichtung eine Bremseinrichtung oder eine Feststelleinrichtung oder eine Feststellbremse oder dergleichen aufweist, um eine Position der Fahreinrichtung in Längsrichtung zu fixieren. Eine solche Fixierung erfolgt insbesondere wenigstens vor einer Höhenverstellung des Beladekopfes, damit sichergestellt wird, dass die Zuführeinrichtung sich in Längsrichtung bewegt, während der Beladekopf und die Fahreinrichtung in Längsrichtung ortsfest verbleiben.

In allen Ausgestaltungen ist es bevorzugt, dass der Beladekopf wenigstens eine Verteileinrichtung zur Erzeugung wenigstens eines vorbestimmten Lagenbildes umfasst. Möglich und bevorzugt ist es insbesondere, dass der Beladekopf zur Erzeugung von abwechselnd aufeinander gestapelten Lagenbildern geeignet und ausgebildet ist, wobei sich die Säcke jeweils stückweise überlappen. Das wird dadurch realisiert, dass einzelne Säcke eines Lagenbildes um 90° gedreht werden, sodass sich aufgrund der unterschiedlichen Länge und Breite jeweils ein Überlapp der jeweils gestapelten Säcke und somit eine Verzahnung der Säcke untereinander ergibt.

Die Anfertigung solcher Lagenbilder ist im angeführten Stand der Technik schon bekannt und wird bei der erfindungsgemäßen Vorrichtung in ähnlicher oder gleicher Weise durchgeführt.

Vorzugsweise umfasst die Zuführeinrichtung wenigstens ein Zuführband, um die Säcke zu transportieren. Der Zuführeinrichtung ist vorzugsweise eine Übergabeeinrichtung für antransportierte Säcke zugeordnet. Die beispielsweise von einer rotierenden Packmaschine gefüllten Säcke werden von der Packmaschine über ein Förderband abtransportiert und beispielsweise über die Übergabeeinrichtung der Zuführeinrichtung zugeführt. Dabei ist die Übergabeeinrichtung insbesondere ortsfest angeordnet, während die Zuführeinrichtung darunter vorgesehen und in Längsrichtung beweglich ist. Dabei wird die Zuführeinrichtung mit der gesamten Vorrichtung in Längsrichtung bewegt, um die gesamte Ladefläche beispielsweise eines LKW in Längsrichtung befüllen zu können. Außerdem ist die Zuführeinrichtung längsbeweglich, um bei einer Höhenverstellung des Beladekopfes den entsprechenden Längenausgleich vorzunehmen. Die Zuführeinrichtung weist eine solche Länge auf, dass in jeder Verstellposition des Beladekopfes eine zuverlässige Übergabe der antransportierten Säcke von der Übergabeeinrichtung auf die Zuführeinrichtung möglich ist. Dadurch wird sichergestellt, dass auch bei einer Höhenverstellung des Beladekopfes die Übergabeeinrichtung noch zuverlässig oberhalb der Zuführeinrichtung angeordnet ist.

In allen Ausgestaltungen ist es bevorzugt, dass die Transportpuffereinrichtung eine Transportstrecke aufweist, wobei die Transportstrecke wenigstens ein Transportband, wenigstens eine Pufferstrecke und wenigstens einen Zuteilungsförderer umfasst. Die Pufferstrecke dient zur Zwischenpufferung von Säcken beispielsweise bei einem Lagenwechsel oder dergleichen, damit die vorgeschaltete Packmaschine kontinuierlich weiter produzieren kann. Der Zuteilungsförderer gibt die Säcke gezielt an den Beladekopf ab, um bedarfsgemäß Säcke dem Beladekopf zuzuführen. Die Pufferstrecke kann dabei eine Rollenstrecke und/oder eine Gleitstrecke umfassen, auf der bzw. auf denen die Säcke passiv gefördert werden.

In allen Ausgestaltungen ist es bevorzugt, dass die Transportpuffereinrichtung wenigstens eine Entkopplungsstrecke umfasst, die insbesondere als Rollenstrecke oder Gleitstrecke ausgebildet sein kann. Vorzugsweise ist eine Entkopplungsstrecke am Anfang der Transportpuffereinrichtung vorgesehen, um eine Entkopplung zwischen der Zuführeinrichtung und der Transportpuffereinrichtung zu erzielen.

In allen Ausgestaltungen ist der Beladekopf insbesondere zwischen einer oberen Wartungsstellung, einer unteren Wartungsstellung und wenigstens mehreren höhenunterschiedlichen Beladepositionen höhenverstellbar. Ein Verfahren des Beladekopfes zu einer unteren Wartungsstellung unterhalb der untersten Beladeposition ist sehr vorteilhaft, da der Beladekopf so üblicherweise ohne ein Gerüst oder dergleichen zugänglich ist, sodass eine Reparatur am Beladekopf in der unteren Wartungsstellung erfolgen kann. Ebenso kann der Beladekopf während des Betriebes - ohne das Transportmittel entfernen zu müssen - in eine obere Wartungsstellung gefahren werden, um einen defekten oder falsch liegenden Sack zu entfernen oder auszurichten.

In bevorzugten Ausgestaltungen ist die Zuführeinrichtung mit der Fahreinrichtung in Längsrichtung über eine Verbindungseinrichtung mit zwei teleskopierenden Verbindungskomponenten verbunden, sodass die Zuführeinrichtung und die Fahreinrichtung in variablem Abstand zueinander angeordnet sind. Das ermöglicht es, dass über die Verbindungseinrichtung nach oben gerichtete Vertikalkräfte auf die Zuführeinrichtung und über die als Hebel wirkende Verbindungseinrichtung auch auf die Fahreinrichtung verteilt werden. Besonders bevorzugt ist an beiden Längsseiten eine derartige Verbindungseinrichtung vorgesehen.

Die Verbindungseinrichtung ist in sich teleskopierbar, sodass bei einer Höhenverstellung des Beladekopfes die zwei teleskopierbaren Verbindungskomponenten miteinander teleskopieren. Es können von unten auftretende Vertikalkräfte von beiden Verbindungskomponenten aufgenommen und entsprechend abgeleitet werden.

Deshalb ist die Verbindungseinrichtung besonders bevorzugt zur Aufnahme und Verteilung von Vertikalkräften auf die Zuführeinrichtung und die Fahreinrichtung ausgebildet. Derartige Vertikalkräfte können beispielsweise auftreten, wenn der Beladekopf beim Anheben oder Absenken in ungeplanter oder unerwarteter Weise gegen andere Gegenstände oder Komponenten stößt und sich deshalb Vertikalkräfte von dem Beladekopf über die Transportpuffereinrichtung nach oben hin übertragen. Nimmt nur die Zuführeinrichtung derartige Vertikalkräfte auf, kann dies in ungünstigen Fällen zu einem Abheben der Zuführeinrichtung von der Schiene bzw. der Zuführebene führen. Eine Verteilung solcher Vertikalkräfte auf die Zuführeinrichtung und die Fahreinrichtung führt zu einer verbesserten Ableitung derartiger Vertikalkräfte, die letztendlich aus Drehmomenten resultieren, die auf die als Parallelogramm aufgebaute Transportpuffereinrichtung einwirken.

Insgesamt stellt die Erfindung eine vorteilhafte Vorrichtung zum Beladen zur Verfügung, bei der der Beladekopf einfach höhenverstellbar ist. Eine große Bauhöhe wird dabei nicht benötigt, da die Höhenverstellung des Beladekopfes über wenigstens ein flexibles Element erfolgt, welches z. B. einfach aufgewickelt wird und somit nach oben keinen besonderen Bauraum erfordert. Der Antrieb einer Seilrolle oder einer Seilwinde ist mechanisch einfach realisierbar und benötigt keine Kopplung. Durch die Koppeleinrichtung wird sichergestellt, dass der Beladekopf ortsfest verbleibt, obwohl das Seil flexibel ausgebildet ist. Die Koppeleinrichtung bewirkt, dass sich die Zuführeinrichtung nach hinten verschiebt, wenn der Beladekopf hochgefahren wird. Ein Verschwenken des Beladekopfes an dem Seil wird durch die Koppeleinrichtung verhindert, sodass der Beladekopf ortsfest unterhalb der Fahreinrichtung verbleibt. Eine Auslenkung des Beladekopfes wird zuverlässig vermieden.

Durch die Parallelogrammführung an der Transportpuffereinrichtung wird eine Höhenverstellung des Beladekopfes ermöglicht, ohne dass der Beladekopf seinen Neigungswinkel verändert. Das Transportband der Transportpuffereinrichtung sorgt für einen zuverlässigen Weitertransport der Säcke, während die Pufferstrecke für eine Zwischenpufferung von beispielsweise einem, zwei oder drei Säcken sorgt, bevor die Säcke von dem Zuteilungsförderer an den Beladekopf übergeben werden. Dadurch wird für einen geringeren Verschleiß - auch bei einem dauerhaft umlaufenden Transportband - in der Transportpuffereinrichtung gesorgt.

Weitere Vorteile und Merkmale der vorliegenden Erfindung ergeben sich aus dem Ausführungsbeispiel, welches mit Bezug auf die beiliegenden Figuren im Folgenden erläutert wird:
In den Figuren zeigen:
- Fig. 1: eine perspektivische Ansicht der Vorrichtung mit der Beladeeinrichtung;
- Fig. 2: die Vorrichtung aus Fig. 1 in einer Vorderansicht;
- Fig. 3: die Vorrichtung aus Fig. 1 in einer Seitenansicht;
- Fig. 4: die Vorrichtung nach Fig. 1 in einer Draufsicht;
- Fig. 5: die Transportpuffereinrichtung und den Beladekopf der Vorrichtung nach Fig. 1 beim Beladen;
- Fig. 6: die Transportpuffereinrichtung und den Beladekopf aus Fig. 5 in einer unteren Wartungsposition;
- Fig. 7: die Transportpuffereinrichtung in einer schematischen perspektivischen Ansicht;
- Fig. 8: die Transportpuffereinrichtung aus Fig. 7 in einer schematischen Draufsicht;
- Fig. 9: die Vorrichtung aus Fig. 1 in einer schematischen Vorderansicht;
- Fig. 10: eine schematische perspektivische Ansicht der Transportpuffereinrichtung; und
- Fig. 11: zwei unterschiedliche Lagenbilder, die aufeinander gestapelt werden.

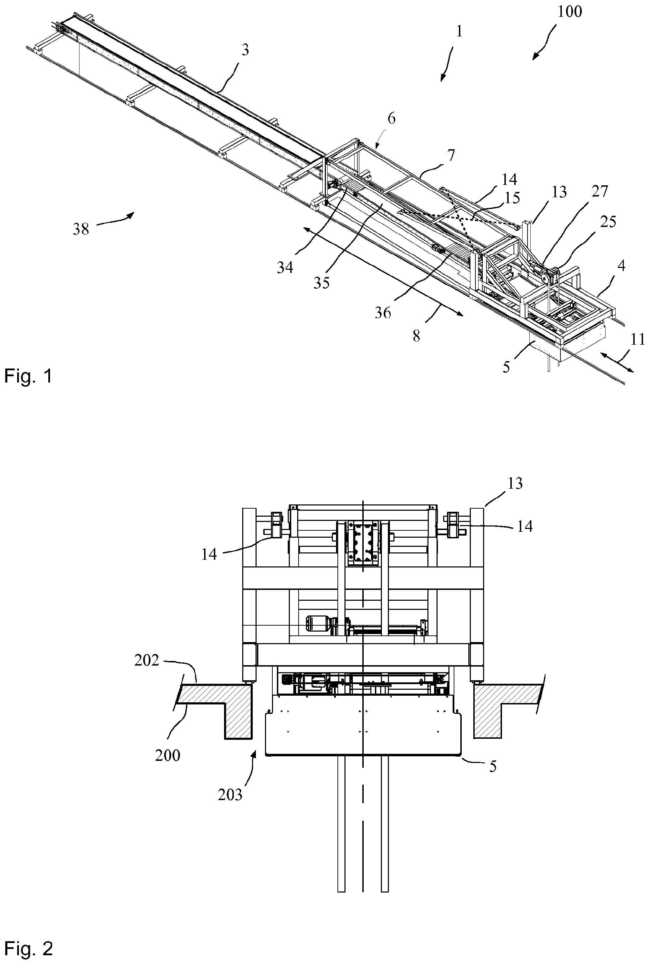

Eine erfindungsgemäße Vorrichtung 100 mit einer Beladeeinrichtung 1 ist in einer perspektivischen Ansicht in Figur 1 schematisch dargestellt. Die Vorrichtung 100 ist hier an einer Aussparung in einer in Fig. 1 nicht näher dargestellten Trägereinrichtung bzw. an einem Gebäude 200 angeordnet. Die Beladeeinrichtung 1 ist in Längsrichtung 11 hier auf Schienen 211 verfahrbar vorgesehen und verfügt über eine Zuführeinrichtung 3, über die insbesondere mit Zement oder anderen Schüttgütern gefüllte Säcke 2 oder andere Stückgüter zugeführt werden. Der Zuführeinrichtung 3 werden an einer geeigneten Stelle ,von einer nicht dargestellten Packmaschine, die Säcke 3 übergeben.

An der Zuführeinrichtung 3 ist ein Transportband vorgesehen, welches die Säcke einer Transportpuffer¬einrichtung 6 zuführt., Die Transportpuffer¬einrichtung 6 verbindet die Zuführeinrichtung 3 mit einem Beladekopf 5. Der Beladekopf 5 ist höhenverstellbar an einer Fahreinrichtung 4 gehalten. Bei der Höhenverstellung des Beladekopfes 5 bleibt der Beladekopf 5 in Längsrichtung 11 ortsfest. Wird der Beladekopf 5 nach oben verfahren, so schiebt sich die Zuführeinrichtung 3 nach hinten. Wenn der Beladekopf 5 nach unten gefahren wird, bewegt sich die Zuführeinrichtung 3 auf die (bei der Höhenverstellung hier) ortsfeste Fahreinrichtung 4 zu. Deshalb hängt eine Länge der Beladeeinrichtung 1 und ein Abstand 102 der Zuführeinrichtung 3 und der Fahreinrichtung 4 in Längsrichtung 11 von der Höhenposition des Beladekopfes 5 ab.

Die Transportpuffereinrichtung 6 dient zum Transport der Säcke 2 von der Zuführeinrichtung 3 zu dem Beladekopf 5 und zum Puffern derselben, wenn bei der Beladung eines Transportmittels 300 wie beispielsweise eines LKW die Säcke 2 lagenweise auf der Ladefläche 301 abgelegt werden. Anschließend wird der Beladekopf 5 um eine Lage nach oben gefahren und es wird das nächste Lagenbild geformt und abgelegt.

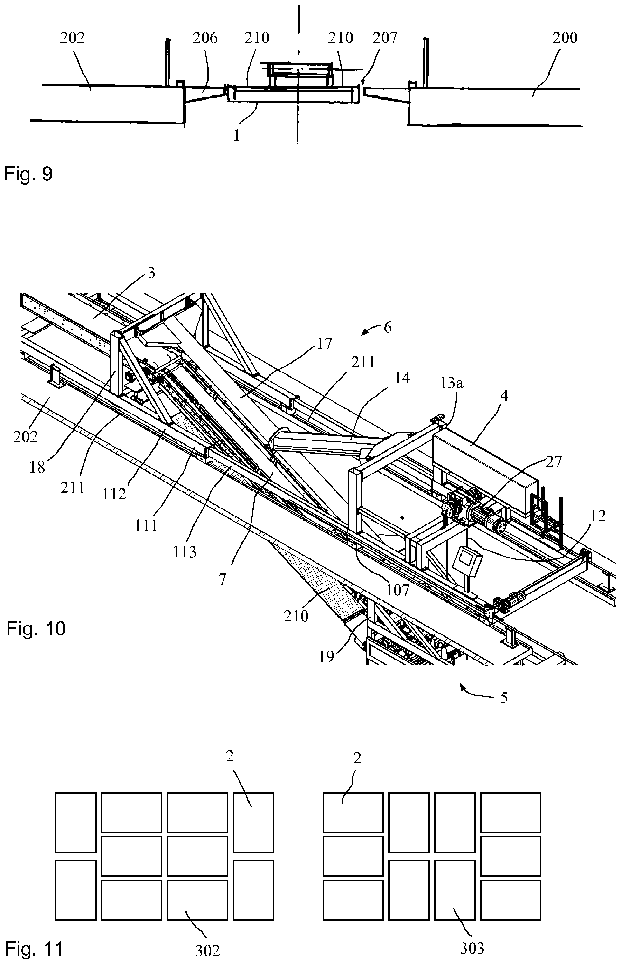

Die Beladeeinrichtung 1 ordnet an dem Beladekopf 5 jeweils fünf bzw. zehn Säcke oder eine andere Anzahl zu einem vollständigen Lagenbild nach einem vorbestimmten Muster, wie es z. B. in Figur 11 dargestellt ist, und legt solche fertigen Lagen nacheinander aufeinander ab, während der Beladekopf 5 von der Ladefläche aus stückweise nach oben gezogen wird. Durch die optional unterschiedliche Orientierung der Säcke 2 innerhalb eines Lagenbilds 302, 303 und durch die aneinander abwechselnden Lagenbilder wird eine "Verzahnung" der Säcke 2 ineinander erreicht, sodass die gestapelten Säcke eine erhebliche Stabilität aufweisen und sich auch zum Transport im LKW ohne Seitenwände eignen. Die Beladeeinrichtung 1 eignet sich aber auch zur Beladung von Transportmitteln 300 mit Seitenwänden.

Die Höhendifferenz zwischen dem Beladekopf 5 und der Zuführeinrichtung 3 wird über die Transportpuffereinrichtung 6 überwunden, die eine parallelogrammartige Tragkonstruktion 7 mit einer daran vorgesehenen Transportstrecke 8 aufweist. Die Transportstrecke 8 weist insgesamt einen (variablen) Neigungswinkel auf, dessen aktueller Wert jeweils von der aktuellen Höhendifferenz zwischen dem Beladekopf 5 und der Zuführeinrichtung 3 abhängt.

Die Transportstrecke 8 weist eine Entkoppelungsstrecke 34 auf, die z. B. über ein Gleitblech und/oder eine (nicht angetriebene) Rollenstrecke und/oder eine Kugelbahn oder dergleichen verfügt oder als eine solche ausgebildet ist. Mit der Entkoppelungsstrecke 34 wird eine Entkoppelung des Sacktransports auf der Zuführeinrichtung 3 von dem Weitertransport innerhalb der Transportpuffereinrichtung 6 erzielt. Entlang der Transportstrecke 8 schließt sich an die Entkoppelungsstrecke 34 ein Transportband 35 an, welches angetrieben ist und die Säcke 2 folglich zwangsweise weiter transportiert. Dabei ist die Transportgeschwindigkeit der Säcke entlang des Transportbandes 35 unabhängig von dem Neigungswinkel der Transportstrecke 8 bzw. der Tragkonstruktion 7. Das bedeutet, dass sowohl bei relativ steilen Neigungswinkeln als auch insbesondere bei relativ flachen Neigungswinkeln zwischen beispielsweise 5° und 30° oder 40° oder mehr die Bewegungsgeschwindigkeit der Säcke 2 stets konstant bleibt. Im Einrichtbetrieb kann der Neigungswinkel auch noch kleiner sein. Ein minimaler und ein maximaler Neigungswinkel 9 hängen von den örtlichen Gegebenheiten ab. Vorzugsweise ist der maximale Neigungswinkel kleiner als 60° und insbesondere kleiner als 45°.

An das Transportband 35 schließt sich eine Pufferstrecke 36 an, die hier im Ausführungsbeispiel wenigstens so lang wie ein Sack 2 und insbesondere wenigstens doppelt so lang, wie ein Sack 2 vorgesehen ist. Hier ist die Pufferstrecke 36 kürzer als die dreifache Länge eines Sacks 2. In anderen Ausgestaltungen sind auch andere Abmessungen möglich, wenn mehr oder weniger Säcke 2 gepuffert werden müssen. Der Neigungswinkel der Pufferstrecke 36 entspricht immer dem Neigungswinkel der Entkoppelungsstrecke 34 und immer auch dem Neigungswinkel des Transportbandes 35, da die Transportstrecke 8 linear ausgebildet ist und einen durchgängigen Neigungswinkel 9 aufweist.

Da sich hier im Ausführungsbeispiel eine Zwischenpufferung von 2 Säcken als vorteilhaft herausgestellt hat, um einen kontinuierlichen Betrieb einer vorgeschalteten Packmaschine zum Füllen der Säcke während des Beladevorgangs zu ermöglichen, umfasst die Pufferstrecke 36 hier etwa 2 Säcke. Die Pufferstrecke 36 kann eine antriebslose Rollenstrecke oder eine antriebslose Rollenbahn oder dergleichen umfassen. Jedenfalls ist an der Pufferstrecke 36 kein ständig umlaufendes Transportband vorgesehen, welches die Staufunktion ausführt und einem erhöhten Verschleiß unterliegen würde, während die Säcke gepuffert werden. Ein solcher erhöhter Verschleiß tritt im Stand der Technik auf und wird hier zuverlässig vermieden.

Reicht der Neigungswinkel 9 der Transportstrecke 8 nicht aus, um durch die Schwerkraft einen Sack 2 auf der Pufferstrecke 36 weiter zu fördern, so wird ein Sack 2 auf der Pufferstrecke 36 durch einen nachfolgenden Sack 2 weiter geschoben, der von dem Transportband 35 auf die Pufferstrecke 36 geschoben wird. So wird sicher gesellt, dass auch bei zu geringen Neigungswinkeln der Transportstrecke 8 dennoch für einen stetigen Nachschub an Säcken 2 gesorgt wird. Da hier gleichzeitig die Pufferstrecke 36 nur zwei oder beispielsweise drei Säcke aufnehmen kann, wird darüber hinaus verhindert, dass sich die Säcke auf der Pufferstrecke aufstauen oder aufwerfen und somit keine definierte Position mehr einnehmen, was insbesondere im Stand der Technik mit Stauförderbändern auftritt, die nach dem Aufstauen unter den Säcken durchrutschen und so einen permanenten Druck auf die Längsachsen oder Säcke ausübt.

Im Stand der Technik wurde für eine Pufferstrecke immer eine Mindestneigung für einen selbsttätigen Transport der Säcke vorgegeben. Das ist bei der Vorrichtung 100 nicht nötig. Für einen automatischen Weitertransport der Säcke sorgt das in gleicher Neigung angeordnete Transportband 35.

An die Pufferstrecke 36 schließt sich der hier in Figur 1 nicht mit Bezugszeichen versehene und unter identischem Winkel angeordnete Zuteilungsförderer 34 an, der die Säcke 2 gezielt an den Beladekopf 5 abgibt.

An der Transportpuffereinrichtung 6 ist eine Koppeleinrichtung 13 vorgesehen, die hier über zwei Koppelstangen 14 verfügt, mit denen die Koppeleinrichtung 13 an die Tragkonstruktion 7 gelenkig gekoppelt ist. Eine gestrichelt dargestellte Versteifungseinrichtung 15 kann vorgesehen sein. Es ist auch möglich, dass die Koppelstangen als Rahmen ausgeführt sind und über die Versteifungseinrichtung 15 Diagonalverbindungen aufweist. Möglich und bevorzugt ist auch eine Variante mit nur einer zentralen Koppelstange 14.

Die Koppeleinrichtung 13 mit der Koppelstange 14 bzw. den Koppelstangen 14 sorgt dafür, dass bei einer Höhenverstellung des Beladekopfes 5 der Beladekopf 5 ortsfest verbleibt, obwohl er über ein Seil 12 als flexibles Element 12 an der Fahreinrichtung 4 gehalten wird.

Figur 2 zeigt eine Vorderansicht der Vorrichtung 100 mit der Beladeeinrichtung 1. Dabei ist die Aussparung 203 in der Zuführebene 202 der Trägereinrichtung bzw. des Gebäudes 200 zu erkennen. Der Beladekopf ragt von oben in die Aussparung 203 hinein bzw. durch diese nach unten hin durch. In seitlichen Bereichen ist oben die Koppeleinrichtung 13 mit den Koppelstangen 14 zu erkennen, die dafür sorgen, dass bei einer Höhenverstellung des Beladekopfes 5 eine Längsverschiebung der Zuführeinrichtung 3 erfolgt, während der Beladekopf 5 in Längsrichtung 11 ortsfest verbleibt.

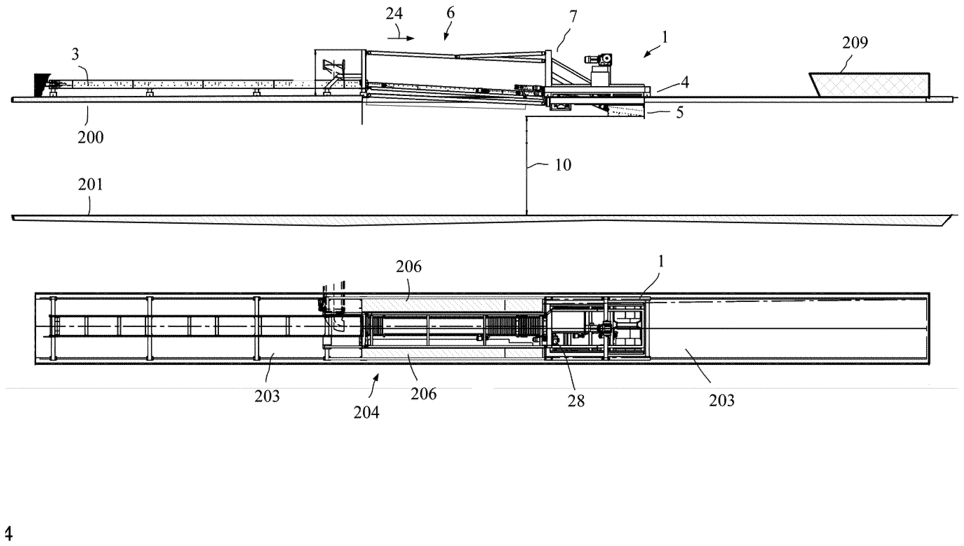

Figuren 3 und 4 zeigen eine Seitenansicht und eine Draufsicht auf die Vorrichtung 100 an der Trägereinrichtung 200. Die Säcke 2 werden über die Zuführeinrichtung 3 entlang der Förderrichtung 24 zu der Transportpuffereinrichtung 6 und entlang dieser zu dem Beladekopf 5 gefördert. Die Transportpuffereinrichtung umfasst die Tragkonstruktion 7, die an die Koppeleinrichtung 13 gekoppelt ist.

Die Beladeeinrichtung 1 ist hier in der oberen Wartungsstellung 38 abgebildet, in der der Beladekopf 5 bis in die Aussparung 203 in der Zuführebene bzw. Decke 202 der Trägereinrichtung 200 hoch gezogen ist.

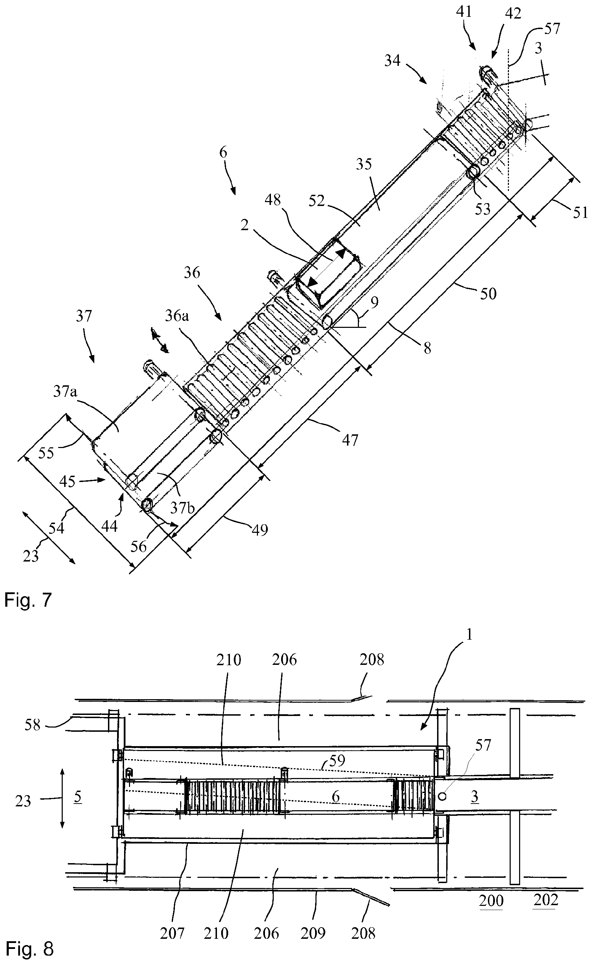

In der Draufsicht gemäß Figur 4 sind neben der Transportpuffereinrichtung 6 in der dargestellten Wartungsposition 204 an der Wartungsaufnahme 205 die Stege 206 erkennbar, die hier seitlich an der Zuführebene 202 angebracht sind und die Spalte 207 zwischen der Trägereinrichtung 200 und der Transportpuffereinrichtung 6 zu einem Teil verschließen. Zusätzlich sind Stege 210 an der Transportpuffereinrichtung 6 vorgesehen (Vgl. Fig. 8), sodass die verbleibenden Spalte 207 das aus Arbeitsschutzgründen zulässige Maß nicht überschreiten.

Die Stege 206 und 210 auf beiden Seiten der Transportpuffereinrichtung 6 werden als Plattform genutzt , um Wartungsarbeiten an der Transportpuffereinrichtung 6 durchzuführen. Die Gefahr eines Durchfallens durch etwaige Spalte wird durch die Stege 206 und 210 sicher verhindert. Um die Aussparung 203 abzusichern, ist ein Zaun 209 vorgesehen, der zum Betreten der Stege 206 entsprechende Türen 208 aufweisen kann.

Der Abstand 102 der Zuführeinrichtung 3 von der Fahreinrichtung 4 hängt von der Höhe des Beladekopfes 5 ab und ist in Fig. 3 maximal, da sich der Beladekopf 5 in der oberen Wartungsstellung 38 befindet.

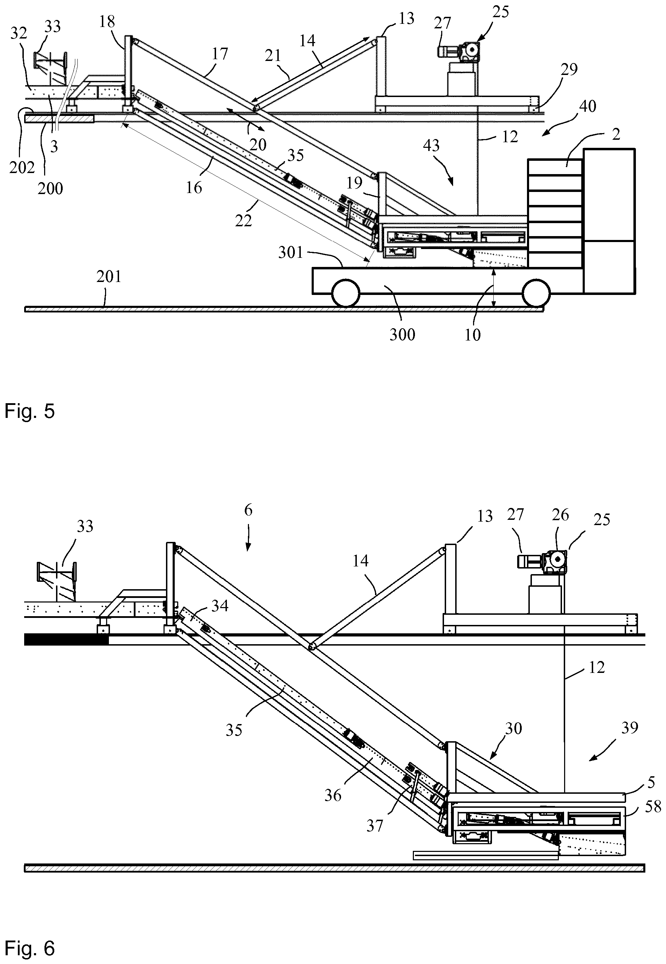

Figur 5 zeigt eine vergrößerte Seitenansicht der Beladeeinrichtung 1 an der Trägereinrichtung 200 und insbesondere die Transportpuffereinrichtung 6 im Beladezustand. Stark schematisch ist ein Transportmittel in Form eines LKW 300 abgebildet, auf dessen Ladefläche 301 ein erster Sackstapel mit Säcken 2 gestapelt ist. Der Beladekopf 5 legt nun eine zweite Lage hinter der ersten Lage ab. Im Betriebsablauf wird der Beladekopf 5 nach der Ablage eines Lagenbildes 302, 303 (vgl. Figur 11) jeweils stückweise an dem flexiblen Element 12 über das Hubwerk 25 mit dem Hubmotor 27 nach oben gezogen, um die nächste Lage passgenau abzulegen. Wenn eine Stapelhöhe von beispielsweise 7 Säcken erreicht wird, wird die Beladeeinrichtung 1 ein entsprechendes Stück zurück bewegt und der Beladekopf 5 wird wieder bis auf die Ladefläche 301 abgesenkt, um das nächste Lagenbild direkt auf der Ladefläche 301 abzulegen.

Der LKW 300 fährt auf der Transportfläche 201, die beispielsweise der Boden des Gebäudes 200 sein kann. Auf der Zuführebene 202, die beispielsweise eine Decke des Gebäudes 200 sein kann, ist die Zuführeinrichtung 3 verfahrbar angeordnet. Durch die Aussparung 203 in der Zuführebene 202 erstreckt sich die Transportpuffereinrichtung 6 von oberhalb der Zuführebene 202 aus durch die Aussparung 203 nach unten, wo sich im Beladezustand der Beladekopf 5 befindet. Die Transportstrecke 7 ist linear ausgebildet und weist über die Entkopplungsstrecke 34, das Transportband 35 und die Pufferstrecke 36 sowie den Zuteilungsförderer 37 eine gleichförmige Neigung auf. Der Neigungswinkel 9 hängt von der Arbeitshöhe des Beladekopfes 5 ab.

Die Transportpuffereinrichtung 6 weist eine Tragkonstruktion 7 auf, die parallelogrammartig ausgebildet ist und einen ersten Anschlussrahmen 18 aufweist, der an die Zuführeinrichtung 3 grenzt und der einen zweiten Anschlussrahmen 19 aufweist, der an dem Beladekopf 5 angrenzt. Die Anschlussrahmen 18 und 19 sind über einen unteren Längsverbinder 16 und einen oberen Längsverbinder 17 gelenkig miteinander verbunden.

Die Tragkonstruktion 7 weist eine Länge 22 auf, die etwa auch der Länge der Längsverbinder 16 und 17 entspricht (+/- 10%). In einem mittleren Bereich 20 des oberen Längsverbinders 17 ist eine Koppelstange 14 der Koppeleinrichtung 13 an den Längsverbinder 17 angekoppelt. Insbesondere ist die Koppelstange 14 mit ihrem Koppelpunkt in der Mitte des Längsverbinders 17 angekoppelt. Die Länge 21 der Koppelstange 14 entspricht insbesondere der halben Länge des Längsverbinders 17 (+/- 10%).

Klar erkennbar ist in Figur 5, dass der Zuführeinrichtung 3 über eine Übergabeeinrichtung 33 die Säcke 2 zugeführt werden, die beispielsweise von einer Packmaschine gefüllt und zu der Beladeeinrichtung 1 transportiert werden. Die Übergabeeinrichtung 33 legt die Säcke 2 von oben auf die Zuführeinrichtung 3 ab. Die Zuführeinrichtung 3 ist gegenüber der Übergabeeinrichtung 33 längsverstellbar. Auch bei unterschiedlichen Längspositionen der Zuführeinrichtung 3 ist eine zuverlässige Übergabe an die Beladeeinrichtung 1 gesichert.

In der Seitenansicht ist ein flexibles Element 12 sichtbar. Zur Sicherung sind zwei hintereinander liegende Seile 12 vorgesehen, damit auch beim Reißen eines Seiles für die nötige Sicherheit gesorgt wird. Das flexible Element 12 kann auch als umlaufender Zahnriemen ausgeführt sein.

Die Ladefläche 301 befindet sich hier in einer Höhe 10 oberhalb der Transportfläche 201. Die Transportfläche 201 kann insbesondere der Boden des Gebäudes oder aber auch die Wasseroberfläche bei Beladung von Schiffen sein.

Während Figur 5 die Beladeposition 40 darstellt, zeigt Figur 6 den gleichen Ausschnitt wie Figur 5 in der unteren Wartungsstellung 39. In dieser Stellung ist der Beladekopf 5 bis kurz oberhalb der Transportfläche 201 bzw. des Bodens abgesenkt. Gegebenenfalls ist es auch möglich, den Beladekopf 5 ganz auf die Transportfläche 201 abzusenken. Jedenfalls ist die Höhe des Beladekopfes 5 so gering, dass eine komfortable Reparatur oder Wartung des Beladekopfes 5 möglich ist, z. B. wenn größere oder kleinere Komponenten z. B. ein Gurt oder andere Verschleißteile gewechselt werden müssen. Solche Maßnahmen können durchgeführt werden, ohne ein Gerüst aufbauen zu müssen.

In jeder beliebigen Längsposition kann ohne Entfernung des Transportmittels der Beladekopf 5 nach oben verfahren werden, um einen festgeklemmten Sack oder einen defekten Sack aus dem Beladekopf 5 entfernen zu können. Eine solche obere Wartungsstellung 38 oder obere Stellung zeigt Fig. 1. Um die Zugänglichkeit zu der Transportpuffereinrichtung zu erleichtern, können an den unteren Längsverbindern klappbare oder einhängbare Wartungsstege vorgesehen sein, um die Transportpuffereinrichtung gefahrlos zu erreichen. An dem Beladekopf 5 kann eine Einstiegshilfe vorgesehen sein, die es ohne große Höhendifferenz ermöglicht, den Beladekopf zu betreten.

Figur 7 zeigt eine stark schematische perspektivische Darstellung der Transportpuffereinrichtung 6. Die Transportpuffereinrichtung 6 übernimmt an einem Puffereingang 41 auf einer Aufgabehöhe 42 die durch die Zuführeinrichtung 3 zugeführten Säcke 2. Die Transportstrecke 8 weist entlang der Transportpuffereinrichtung 6 weist zunächst eine Entkoppelungsstrecke 34 über eine Länge 51 auf. Die Entkoppelungsstrecke 34 weist hier eine antriebslose Rollenstrecke oder dergleichen auf. An die Entkoppelungsstrecke 34 schließt sich ein (angetriebenes) Transportband 35 an, auf dem hier beispielhaft ein Sack 2 mit einer Länge 48 eingezeichnet ist. Das Transportband 35 wird über Transportwalzen 53 umgelenkt und umfasst einen Transportriemen oder einen Transportgurt 52, auf dem die Säcke 2 aufliegen. An das Transportband 35 schließt sich die antriebslose Pufferstrecke 36 an, die als Rollenstrecke 36a oder Rollenbahn ausgeführt ist, aber auch über eine Gleitbahn mit einem Gleitblech oder dergleichen verfügen kann. An der Pufferstrecke 36 werden die Säcke 2 gepuffert, um einen Zeitausgleich zwischen der kontinuierlich arbeitenden Packmaschine und der benötigten Pufferzeit beim Versetzen des Beladekopfes von einer Ebene zur anderen Ebene oder in Längsrichtung zu ermöglichen.

Die Säcke 2 gleiten hier regelmäßig durch Schwerkraft bedingt über die Pufferstrecke 36 zu dem Zuteilungsförderer 37 oder sie werden bei zu geringem Neigungswinkel durch nachfolgende Säcke 2 zu dem Zuteilungsförderer 37 geschoben. Der Zuteilungsförderer 37 umfasst hier ein oberes Band 37a und ein unteres umlaufendes Band 37b, die den Sack 2 von oben und unten gezielt antreiben bzw. stoppen. Am Auslauf des Zuteilungsförderers 37 werden die Säcke am Pufferausgang 44 auf einer Abgabehöhe 45 abgegeben. Der Zuteilungsförderer 37 erstreckt sich über eine Länge 49, während die Pufferstrecke 36 eine etwas größere Länge 47 aufweist, die wenigstens doppelt so lang ist, wie die Länge der typischerweise zu verarbeitenden Säcke 2. Die Transportpuffer¬einrichtung 6 ist insgesamt hier unter einem Neigungswinkel 9 dargestellt, der von dem Bearbeitungsfortschritt abhängt. Das Transportband 35, die Pufferstrecke 36 und der Zuteilungsförderer 37 weisen zu jedem Zeitpunkt einen gemeinsamen Neigungswinkel 9 auf.

Der Zuteilungsförderer 37 kann in anderen Ausgestaltungen auch als einfache Klappe ausgeführt sein.

Der Beladekopf 5 kann insgesamt in Querrichtung 23 verstellbar ausgeführt sein. Vorzugsweise ist aber nicht der ganze Beladekopf, sondern nur ein hier unteres Kopfteil 58 seitlich verstellbar vorgesehen. Das Kopfteil 58 kann hier in Querrichtung 23 um bis zu +/- 200 mm (oder auch 300 mm) verfahren werden, sodass sich insgesamt ein Verstellweg von 400 mm (600 mm) ergibt. Je nach Anwendungsfall können auch größere und kleinere Verstellwerte möglich und sinnvoll sein.

Hier dient die seitliche Verstellung des Kopfteils 58 insbesondere dazu, eine in Querrichtung 23 ungenaue Positionierung eines LKW oder sonstigen Transportmittels 300 einfach ausgleichen zu können. Anstatt das Transportmittel 300 zeitaufwendig neu auszurichten, kann auch der Beladekopf 5 bzw. dessen Kopfteil 58 zur Seite verfahren werden, um hier z. B. bis zu 200 mm Versatz auszugleichen. Deshalb ist die Transportpuffereinrichtung 6 vorzugsweise schmaler ausgebildet, als eine Breite des Beladekopfes 5 in der (mittleren) Grundposition.

Besonders bevorzugt ist die Transportpuffereinrichtung 6 so schmal ausgebildet, dass bei einer maximalen Seitenverstellung des Kopfteils 58 in beide seitlichen Richtungen die Transportpuffereinrichtung 6 nicht weiter nach außen ragt als das Kopfteil 58 auf beiden Seiten. Dadurch ist gewährleistet, dass auch bei Beladung von Transportmitteln mit Seitenwänden eine zuverlässige Beladung der Ladefläche 301 bis zur Seite hin möglich ist. Würde die Transportpuffereinrichtung 6 seitlich über den Beladekopf 5 bzw. das verstellbare Kopfteil 58 überstehen, so könnte die Transportpuffereinrichtung 6 bzw. das daran überstehende Teil mit der Seitenwand des Transportmittels 300 kollidieren.

Um den Beladekopf 5 in die Aussparung 203 in dem Gebäude bzw. der Trägereinrichtung 200 nach oben zu bewegen, muss die Aussparung breiter ausgeführt werden als der Beladekopf 5, der wiederum breiter ist, als die Transportpuffereinrichtung 6. Dadurch würden ohne die Wartungsstege 105, 106 seitliche Lücken an der Aussparung 203 verbleiben, was zu erheblichen Beeinträchtigungen der Arbeitssicherheit bei Wartungsarbeiten ohne Gerüst führen könnte, wenn die Vorrichtung nicht in die Wartungsposition 204 an der Wartungsaufnahme 205 verfahren wird.

Die Stege 206, 210 stellen eine sichere Arbeitsplattform zur Verfügung.

Die Transportstrecke 8 ist hier um die gestrichelt eingezeichnete Achse 57 verschwenkbar vorgesehen. Die Achse 57 kann vertikal ausgerichtet sein oder aber z. B. etwa senkrecht zu der Transporteinrichtung 6 ausgerichtet sein. Die Transportstrecke 8 wird auf und gegenüber der Transportpuffereinrichtung 6 verschwenkt, sodass das untere Ende der Transportstrecke 8 um den Schwenkbereich 56 bzw. 57 nach rechts bzw. links verschwenkt werden kann. Dadurch wird auch bei einer Seitenverstellung des Kopfteils 58 der Übergabepunkt der Säcke 2 relativ zu dem Kopfteil 58 konstant gehalten. Dadurch muss bei einer Seitenverstellung des Kopfteils 58 die Lagenbildung aus den einzelnen Säcken nicht relativ geändert werden. Insgesamt kann sich der Pufferausgang 44 über die Breite 54 erstrecken.

Bei einer entsprechenden Ausgestaltung des Beladekopfes ist es allerdings auch möglich, die Position der Transportstrecke relativ zur Transportpuffereinrichtung unverändert zu lassen und so kein Verschwenken der Transportstrecke vorsehen zu müssen.

Figur 8 zeigt eine Draufsicht auf den Bereich der Transportpuffereinrichtung 6 der Beladeeinrichtung 1 in der oberen Wartungsstellung 38. An dem Gebäude 200 mit der Zuführebene 202 ist der Zaun 209 mit Türen 208 vorgesehen, um in dem Bereich der Stege 206 in der Wartungsposition 204 den Zugang zu der Transportpuffereinrichtung 6 zu ermöglichen. Die Stege 206 an der Zuführebene und die Stege 210 an der Transportpuffereinrichtung 6 bilden gemeinsam eine komfortable und sichere Wartungsplattform in der Wartungsaufnahme 205.

Figur 9 zeigt eine schematische Vorderansicht 100 der Trägereinrichtung 200 mit den Stegen 206 und den zwischen den Stegen 206 und der Beladeeinrichtung 1 verbleibenden Spalten 207, die jedenfalls so klein sind, dass ein Durchfallen von nur sehr kleinen Gegenständen, nicht aber von Personen, möglich ist und den entsprechenden Sicherheitsvorschriften entsprechen. An der Beladeeinrichtung 1 sind die Stege 210 vorgesehen, sodass sehr kleine Spalte 207 verbleiben.

In Figur 10 ist eine Abwandlung der Transportpuffereinrichtung 6 dargestellt, bei der die Transportpuffereinrichtung 6 einen oberen rohrartigen Längsverbinder 16 und einen unteren rohrartigen Längsverbinder 17 umfasst. Die rohrartigen Längsverbinder 16, 17 weisen Durchmesser zwischen etwa 80 mm und 500 mm oder mehr auf, sodass sie eine hohe Torsionssteifigkeit zur Verfügung stellen. Die rohrartigen Längsverbinder 16, 17 sind über Knotenbleche 118, 119 mit den Anschlusselementen in Form von Anschlussrahmen 18, 19 verbunden, sodass sich eine parallelogrammartige Struktur ergibt.

Figur 10 zeigt eine schematische perspektivische Darstellung der Transportpuffereinrichtung 6 mit der Tragkonstruktion 7 und der Koppeleinrichtung 13 mit hier einer einzigen rohrförmigen Koppelstange 14 die an einem Ende schwenkbar mit dem oberen Längsverbinder 17 und an dem anderen Ende schwenkbar mit dem Anschlussrahmen bzw. Anschlusselement 13a der Koppeleinrichtung 13 gekoppelt ist. Zwischen der Zuführeinrichtung 3 und der Fahreinrichtung 4 erstreckt sich auf jeder Längsseite oberhalb der Schienen 211 jeweils eine Verbindungseinrichtung 111 mit zwei teleskopierbaren Verbindungskomponenten 112 und 113. Die Verbindungskomponente 112 ist über einen Radsatz 107 an der Schiene 211 verfahrbar geführt. Im unteren Bereich ist der Steg 210 an der Transportpuffereinrichtung 6 zu sehen, der sich unterhalb der Transportstrecke 8 erstreckt. Die Transportpuffereinrichtung 6 bildet mit den senkrechten Anschlussrahmen 18 und 19 und den rohrartigen Längsverbindern 16 und 17 eine Parallelogrammstruktur als Tragkonstruktion 7, an der der Beladekopf 5 horizontal geführt wird. Höhenverstellbar wird der Beladekopf 5 über das Seil 12 an der Fahreinrichtung 4 gehalten. Eine Höhenverstellung erfolgt über den Hubmotor 27.

Die Verbindungseinrichtung 111 nimmt Vertikalkräfte auf, die entstehen können, wenn der Beladekopf 5 z. B. schief auf einer Ladefläche 301 aufsetzt, wenn dort z. B. schon ein einzelner Sack oder ein anderer Gegenstand liegt. Je nach Auftreffwinkel und Auftreffort, können dadurch unterschiedliche Kräfte über die Transportpuffereinrichtung auf die Zuführeinrichtung 3 übertragen werden. Dabei können auch erhebliche Kraftanteile in vertikaler Richtung entstehen. Durch die Verbindungseinrichtung 111 können Vertikalkräfte auf die Zuführeinrichtung 3 und auch auf die Fahreinrichtung 4 abgeleitet werden, wodurch ein Abheben einer der Zuführeinrichtung 3 von der Schiene 211 zuverlässig vermieden wird. Die Verbindungseinrichtung 111 wirkt dabei als Hebel.

Figur 11 zeigt schließlich zwei mögliche unterschiedliche Lagenbilder 302 und 303 aus Säcken 2 die abwechselnd aufeinander gestapelt werden, um durch ein Ineinandergreifen und Überlappen einzelner Sackteile einen festeren Verbund und eine festere Lagenstruktur zu erreichen, die ausreicht, um auch Transportmittel ohne Seitenwände mit Stapeln aus Säcken 2 sicher zu laden. Die einzelnen Säcke sind der besseren Übersichtlichkeit halber beabstandet voneinander dargestellt, weisen aber beim Ablegen keinen Abstand zueinander auf oder werden anschließend noch auf dem Beladekopf dicht aneinander geschoben.

Insgesamt verarbeitet die Beladeeinrichtung bzw. der Beladekopf 5 während der Lagenbildung kontinuierlich die einlaufenden Säcke 2. Das ist mit einer Sackleistung von hier 3000 Sack pro Stunde möglich, wobei beispielsweise mit Zement gefüllte Säcke mit einem Füllgewicht vom 50 kg mit dieser Leistung verarbeitet werden können. Für einen Lagenwechsel bedarf es im konkreten Beispiel einer Zeit von ca. 2 bis 3 Sekunden, in der die vorgeschaltete Packmaschine nicht gestoppt werden sollte. Deshalb müssen etwa 2 bis 3 einlaufende Säcke zwischen gepuffert werden. In einem konkreten Beispiel besteht die Entkoppelungsstrecke 34 zu Beginn der Transportpuffereinrichtung 6 aus einer einer Sacklänge entsprechenden Schwerkraftrollenbahn, einem sich daran anschließenden angetriebenen Gurtförderer und einer weiteren etwa 2 Sacklängen langen Schwerkraftrollenbahn. Die gesamte Puffer- bzw. Staustrecke arbeitet abhängig von der aktuellen Ladehöhe auf beispielsweise einem LKW in unterschiedlichen Neigungswinkeln von typischerweise etwa 10 bis 30°. Die zu puffernden Säcke 2 laufen durch die Transportpuffereinrichtung 6 durch, ohne dass jemals der Gurtförderer bzw. das Transportband 35 unter einem gestoppten Sack hindurchlaufen muss. Beim Wiederbeschleunigen durch den Zuteilungsförderer 37 beschleunigen die Säcke 2 gezielt. Dem Zuteilungsförderer 37 werden die Säcke auf der Pufferstrecke durch ihr Eigengewicht bei einer entsprechenden Neigung zu geführt oder sie erhalten einen Impuls durch den nachfolgenden vom Gurtförderer angetriebenen Sack, sofern die Neigung der Pufferstrecke 36 zu gering ist.

Die Beladeeinrichtung 1 stellt einen höhenverstellbaren Beladekopf 5 zur Verfügung, der sich in seiner Längsposition auch bei einer Höhenverstellung nicht verschiebt, obwohl er nur über z. B. 1 oder 2 Seile an der darüber angeordneten Fahreinrichtung 4 gehalten wird. Das wird durch die Koppeleinrichtung 13 bewirkt, die dafür sorgt, dass die Zuführeinrichtung 3 bei Höhenverstellungen des Beladekopfes 5 längsverstellt wird. Ein weiterer Vorteil dieser Konstruktion ist, dass nur ein Hubmotor verwendet werden muss, der zudem eine Drehbewegung ausführt und das den Beladekopf haltende Seil 12 entweder auf- oder abwickelt. Das ist vorteilhaft, da Linearbewegungen in diesen rauen und oft mit Staub oder Schmutz belasteten Umgebungen stets mit erhöhtem Verschleiß einhergehen.

Die Parallelogrammkonstruktion 7 an der Transportpuffereinrichtung 6 erlaubt in Kombination mit dem Transportband und der Pufferstrecke 36 und dem Zuteilungsförderer 37 einen wartungsarmen Betrieb. Ein unter wartenden Säcken 2 durchschleifender Gurt eines Transportbandes kann weitestgehend oder sogar vollständig vermieden werden.

Dadurch, dass der Beladekopf 5 und die Transportpuffereinrichtung in die obere Wartungsstellung 38 an der Wartungsposition 204 gefahren werden können, wird eine einfachere Reparatur und Wartung der Beladeeinrichtung 1 ermöglicht. Auch an jeder anderen Längsposition kann der Beladekopf 5 auch ohne Entfernen des Transportmittels nach oben für eine Wartung gefahren werden. Einfachere Wartungen oder Wartungen bei Bedarf sind auch in der unteren Wartungsstellung 39 effektiv möglich, die auf dem Boden bzw. der Transportfläche 201 oder geringfügig darüber ermöglicht werden. Ein Aufbau eines Gerüstes oder dergleichen ist nicht nötig. In der oberen Wartungsstellung 38 kann ein Transportband der Transportpuffereinrichtung 6 oder ein sonstiges Transportband nach oben geklappt werden, um den Gurt auszutauschen. Dadurch wird die Wartungszeit nochmals erheblich verkürzt.

Die Fahreinrichtung 4 kann über einen daran angeordneten Antrieb 28 verfügen. Es ist auch möglich, dass ein externer Antrieb vorgesehen ist, der ein umlaufendes Seil oder dergleichen antreibt. Möglich ist auch ein Zahnriemenantrieb um z. B. ein etwaiges Spiel im Antriebsstrang auszugleichen. Deshalb oder aus anderen Gründen kann eine Feststellbremse an der Fahreinrichtung 4 vorgesehen sein. Eine solche Feststellbremse kann z. B. als Schienenzange ausgeführt sein.

Insgesamt kann die Größe des Gebäudes 200 verringert werden, da nicht eine derartige Bauhöhe wie im Stand Technik erforderlich ist. Es werden nämlich keine Hubstangen nach oben gefahren, wenn der Beladekopf 5 höhenverstellt wird. Dadurch kann die Bauhöhe oberhalb der Zuführebene 202 verringert werden, was die Bau- und Investitionskosten verringert.

**Bezugszeichenliste:**

| | | | |
|---|---|---|---|
| 1 | Beladeeinrichtung | 41 | Puffereingang |
| 2 | Sack | 42 | Aufgabehöhe |
| 3 | Zuführeinrichtung | 43 | Bearbeitungsfortschritt |
| 4 | Fahreinrichtung | 44 | Pufferausgang |
| 5 | Beladekopf | 45 | Abgabehöhe |
| 6 | Transportpuffereinrichtung | 47-51 | Länge |
| | | 52 | Transportriemen |
| 7 | Tragkonstruktion | 53 | Transportwalzen, Umlenktrommel |
| 8 | Transportstrecke | | |
| 9 | Winkel, Neigungswinkel | 54 | Breite |
| 10 | Höhe | 55,56 | Schwenkbereich |
| 11 | Längsrichtung | 57 | Drehachse |
| 12 | flexibles Element, Seil | 58 | Kopfteil |
| 13 | Koppeleinrichtung | 100 | Vorrichtung |
| 14 | Koppelstange | 102 | horizontaler Abstand |
| 15 | Versteifungseinrichtung | 105,106 | Wartungssteg |
| 16, 17 | Längsverbinder, Rohr | 107 | Radsatz |
| 18,19 | Anschlussrahmen | 108 | Verstellweg |
| 20 | mittlerer Bereich | 111 | Verbindungseinrichtung |
| 21,22 | Länge | 112, 113 | Teleskopstange, Verbindungskomponente |
| 23 | Querrichtung | | |
| 24 | Förderrichtung | 125, 126 | Stützsteg |
| 25 | Hubwerk | 200 | Trägereinrichtung, Gebäude |
| 26 | Seilrolle | | |
| 27 | Hubmotor | 201 | Transportfläche |
| 28 | Antrieb | 202 | Zuführebene |
| 29 | Bremseinrichtung | 203 | Aussparung |
| 30 | Verteileinrichtung | 204 | Wartungsposition |
| 32 | Zuführband | 205 | Wartungsaufnahme |
| 33 | Übergabeeinrichtung | 206 | Steg |
| 34 | Entkopplungsstrecke | 207 | Spalt |
| 35 | Transportband | 208 | Tür |
| 36 | Pufferstrecke | 209 | Zaun |
| 36a | Rollenstrecke, Rollenbahn | 210 | Steg |
| 37 | Zuteilungsförderer | 211 | Schiene |
| 37a | oberes Band | 300 | Transportmittel, LKW |
| 37b | unteres Band | 301 | Ladefläche |
| 38,39 | Wartungsstellung | 302,303 | Lagenbild |
| 40 | Beladeposition | | |

## Patentansprüche

1. Vorrichtung (100) zum Beladen von Ladeflächen (301) von Transportmitteln (300) mit Säcken (2) oder anderen Stückgütern, mit einer längsbeweglichen Beladeeinrichtung (1) umfassend eine Zuführeinrichtung (3) zum Antransport von Säcken (2), einen mit einer Fahreinrichtung (4) höhenverstellbar verbundenen Beladekopf (5) und eine Transportpuffereinrichtung (6) zwischen der Zuführeinrichtung (3) und dem Beladekopf (5), wobei die Transportpuffereinrichtung (6) den Beladekopf (5) und die Zuführeinrichtung (3) verbindet, wobei der Beladekopf (5) an der längsbeweglichen Fahreinrichtung (4) über ein flexibles Element (12) höhenverstellbar angeordnet und die Fahreinrichtung (4) mit der Transportpuffereinrichtung (6) über eine Koppeleinrichtung (13) gekoppelt ist, um die Höhe (10) des Beladekopfes (5) einzustellen, sodass sich die Zuführeinrichtung (3) bei einer Höhenverstellung des Beladekopfes (5) in Längsrichtung (11) bewegt und der Beladekopf (5) in Längsrichtung (11) ortsfest verbleibt, wobei die Fahreinrichtung (4) einen Antrieb (28) zur Längsbewegung aufweist,
**dadurch gekennzeichnet,**
**dass** die Transportpuffereinrichtung eine parallelogrammartige Tragkonstruktion aufweist und dass die Koppeleinrichtung in einem mittleren Bereich der Tragkonstruktion an die parallelogrammartige Tragkonstruktion gekoppelt ist,
und **dass** die parallelogrammartige Tragkonstruktion (7) einen ersten Anschlussrahmen (18) aufweist, der an die Zuführeinrichtung (3) grenzt und einen zweiten Anschlussrahmen (19) aufweist, der an dem Beladekopf (5) angrenzt, wobei die Anschlussrahmen (18, 19) über einen unteren Längsverbinder (16) und einen oberen Längsverbinder (17) gelenkig miteinander verbunden sind.

2. Vorrichtung (100) nach Anspruch 1, wobei die Koppeleinrichtung (13) schwenkbar an der Fahreinrichtung (4) und/oder der Transportpuffereinrichtung (6) befestigt ist.

3. Vorrichtung (100) nach einem der vorhergehenden Ansprüche, wobei die Koppeleinrichtung (13) wenigstens eine Koppelstange (14) umfasst.

4. Vorrichtung (100) nach einem der vorhergehenden Ansprüche, wobei eine Höhe (10) des Beladekopfes (5) eine Neigung der Transportpuffereinrichtung (6) beeinflusst.

5. Vorrichtung (100) nach einem der vorhergehenden Ansprüche, wobei die Koppeleinrichtung (13) mit einem der Längsverbinder (16, 17) gekoppelt ist.

6. Vorrichtung (100) nach einem der vorhergehenden Ansprüche, wobei eine Länge (21) der Koppeleinrichtung zwischen 40% und 60% der Länge und insbesondere der Hälfte der Länge (22) der parallelogrammartigen Tragkonstruktion beträgt.

7. Vorrichtung (100) nach einem der vorhergehenden Ansprüche, wobei die parallelogrammartige Tragkonstruktion (7) wenigstens ein daran aufgenommenes Transportband (35) aufweist.

8. Vorrichtung (100) nach einem der vorhergehenden Ansprüche, wobei die Transportpuffereinrichtung (6) in Förderrichtung (24) zwischen der Zuführeinrichtung (3) und dem Beladekopf (5) angeordnet ist.

9. Vorrichtung (100) nach einem der vorhergehenden Ansprüche, wobei die Fahreinrichtung (4) ein Hubwerk (25) mit wenigstens einer Seilrolle (26) und wenigstens einem Hubmotor (27) aufweist.

10. Vorrichtung (100) nach einem der vorhergehenden Ansprüche, wobei die Fahreinrichtung (4) eine Bremseinrichtung (29) aufweist.

11. Vorrichtung (100) nach einem der vorhergehenden Ansprüche, wobei der Beladekopf (5) eine Verteileinrichtung (30) zur Erzeugung wenigstens eines vorbestimmten Lagenbildes (302, 303) umfasst.

12. Vorrichtung (100) nach einem der vorhergehenden Ansprüche, wobei die Zuführeinrichtung (3) wenigstens ein Zuführband (32) aufweist und wobei der Zuführeinrichtung (3) eine Übergabeeinrichtung (33) für antransportierte Säcke (2) zugeordnet ist.

13. Vorrichtung (100) nach einem der vorhergehenden Ansprüche, wobei die Transportpuffereinrichtung (6) eine Transportstrecke (8) mit wenigstens einem Transportband (35), wenigstens einer Pufferstrecke (36) und wenigstens einem Zuteilungsförderer umfasst und/oder wobei die Transportpuffereinrichtung (6) wenigstens eine Entkopplungsstrecke (34) umfasst und/oder wobei der Beladekopf (5) zwischen einer oberen Wartungsstellung (38), einer unteren Wartungsstellung (39) und wenigstens mehreren höhenunterschiedlichen Beladepositionen (40) höhenverstellbar ist.

14. Vorrichtung (100) nach einem der vorhergehenden Ansprüche, wobei die Zuführeinrichtung (3) mit der Fahreinrichtung (4) in Längsrichtung (11) über eine Verbindungseinrichtung (111) mit zwei teleskopierenden Verbindungskomponenten verbunden ist, sodass die Zuführeinrichtung (3) und die Fahreinrichtung (4) in variablem Abstand (102) zueinander angeordnet sind und wobei insbesondere über die Verbindungseinrichtung (111) nach oben gerichtete Vertikalkräfte auf die Zuführeinrichtung (3) und die Fahreinrichtung (4) verteilt werden.

## Claims

1. Apparatus (100) for loading bags (2) or other packaged goods onto cargo areas (301) of means of transport (300) by means of a longitudinally movable loading device (1) comprising a feeding device (3) for supplying bags (2), a loading head (5) height-adjustably connected with a traveling device (4) and a transport buffer means (6) between the feeding device (3) and the loading head (5), wherein the transport buffer means (6) connects the loading head (5) with the feeding device (3), wherein the loading head (5) is height-adjustably disposed on the longitudinally movable traveling device (4) by means of a flexible member (12) and the traveling device (4) is coupled with the transport buffer means (6) by means of a coupling device (13) for adjusting the height (10) of the loading head (5) so that upon height adjustment of the loading head (5) the feeding device (3) moves in the longitudinal direction (11) and the loading head (5) remains stationary in the longitudinal direction (11), wherein the traveling device (4) comprises a drive (28) for longitudinal movement,
**characterized in**
**that** the transport buffer means comprises a parallelogram-like supporting structure (7) and that the coupling device is coupled with the parallelogram-like supporting structure in a central region of the supporting structure,
and **that** the parallelogram-like supporting structure (7) comprises a first junction frame (18) abutting the feeding device (3) and a second junction frame (19) abutting the loading head (5), the junction frames (18, 19) being articulated to one another through a bottom longitudinal joint (16) and a top longitudinal joint (17).

2. The apparatus (100) according to claim 1 wherein the coupling device (13) is pivotally attached to the traveling device (4) and/or the transport buffer means (6).

3. The apparatus (100) according to any of the preceding claims wherein the coupling device (13) comprises at least one coupling rod (14).

4. The apparatus (100) according to any of the preceding claims wherein the height (10) of the loading head (5) influences the inclination of the transport buffer means (6).

5. The apparatus (100) according to any of the preceding claims wherein the coupling device (13) is coupled with one of the longitudinal joints (16, 17).

6. The apparatus (100) according to any of the preceding claims wherein the length (21) of the coupling device is between 40% and 60% of the length and in particular half the length (22) of the parallelogram-like supporting structure.

7. The apparatus (100) according to any of the preceding claims wherein the parallelogram-like supporting structure (7) comprises at least one conveyor belt (35) accommodated thereat.

8. The apparatus (100) according to any of the preceding claims wherein the transport buffer means (6) is disposed in the conveying direction (24) between the feeding device (3) and the loading head (5).

9. The apparatus (100) according to any of the preceding claims wherein the traveling device (4) comprises a lifting gear (25) comprising at least one cable spool (26) and at least one lifting motor (27).

10. The apparatus (100) according to any of the preceding claims wherein the traveling device (4) comprises a brake device (29).

11. The apparatus (100) according to any of the preceding claims wherein the loading head (5) comprises a distributor (30) for generating at least one predetermined layer pattern (302, 303).

12. The apparatus (100) according to any of the preceding claims wherein the feeding device (3) comprises at least one feeding belt (32) and wherein the feeding device (3) has a transfer device (33) assigned to it for supplied bags (2).

13. The apparatus (100) according to any of the preceding claims wherein the transport buffer means (6) comprises a conveyor track (8) comprising at least one conveyor belt (35), at least one buffer track (36) and at least one distributing conveyor and/or wherein the transport buffer means (6) comprises at least one decoupling track (34) and/or wherein the loading head (5) is height-adjustable between a top servicing position (38), a bottom servicing position (39), and at least multiple loading positions (40) at different heights.

14. The apparatus (100) according to any of the preceding claims wherein the feeding device (3) is connected with the traveling device (4) in the longitudinal direction (11) via a connector (111) having a pair of telescopic connecting elements so that the feeding device (3) and the traveling device (4) are disposed at variable distances (102) from one another and wherein the connector (111) in particular allows to divert upwardly directed vertical forces to the feeding device (3) and the traveling device (4).

## Revendications

1. Dispositif (100) destiné à charger, de sacs (2) ou d'autres produits de détail, des surfaces de chargement (301) de moyens de transport (300), comprenant un dispositif de chargement (1) longitudinalement déplaçable qui présente un dispositif d'alimentation (3) pour amener des sacs (2), une tête de chargement (5) reliée de manière réglable en hauteur à un dispositif de déplacement (4) ainsi qu'un dispositif tampon de transport (6) entre ledit dispositif d'alimentation (3) et ladite tête de chargement (5), dans lequel ledit dispositif tampon de transport (6) relie la tête de chargement (5) et le dispositif d'alimentation (3), dans lequel la tête de chargement (5) est agencée de manière réglable en hauteur sur le dispositif de déplacement (4) longitudinalement déplaçable, via un élément flexible (12), et le dispositif de déplacement (4) est couplé au dispositif tampon de transport (6) via un dispositif de couplage (13) afin de régler la hauteur (10) de la tête de chargement (5) de sorte que le dispositif d'alimentation (3) se déplace dans la direction longitudinale (11) lorsque la tête de chargement (5) est réglée en hauteur, et la tête de chargement (5) reste stationnaire dans la direction longitudinale (11), le dispositif de déplacement (4) présentant un mécanisme d'entraînement (28) pour le mouvement longitudinal,
**caractérisé par** le fait
le dispositif tampon de transport présente une construction de support de type parallélogramme et que le dispositif de couplage est couplé dans une zone centrale de la construction de support à la construction de support de type parallélogramme,
et que la construction de support (7) de type parallélogramme présente un premier cadre de raccordement (18) qui est contigu au dispositif d'alimentation (3) et présente un deuxième cadre de raccordement (19) qui est contigu à la tête de chargement (5), les cadres de raccordement (18, 19) étant reliés entre eux de façon articulée par l'intermédiaire d'un connecteur longitudinal inférieur (16) et d'un connecteur longitudinal supérieur (17).

2. Dispositif (100) selon la revendication 1, dans lequel le dispositif de couplage (13) est fixé à pivotement sur le dispositif de déplacement (4) et/ou le dispositif tampon de transport (6).

3. Dispositif (100) selon l'une quelconque des revendications précédentes, dans lequel le dispositif de couplage (13) comprend au moins une tige de couplage (14).

4. Dispositif (100) selon l'une quelconque des revendications précédentes, dans lequel une hauteur (10) de la tête de chargement (5) influe sur une inclinaison du dispositif tampon de transport (6).

5. Dispositif (100) selon l'une quelconque des revendications précédentes, dans lequel le dispositif de couplage (13) est couplé à l'un des connecteurs longitudinaux (16, 17).

6. Dispositif (100) selon l'une quelconque des revendications précédentes, dans lequel une longueur (21) du dispositif de couplage est comprise entre 40 % et 60 % de la longueur et en particulier de la moitié de la longueur (22) de la construction de support de type parallélogramme.

7. Dispositif (100) selon l'une quelconque des revendications précédentes, dans lequel la construction de support (7) de type parallélogramme comprend au moins une courroie transporteuse (35) reçue sur celle-ci.

8. Dispositif (100) selon l'une quelconque des revendications précédentes, dans lequel le dispositif tampon de transport (6) est agencé, dans la direction-de transport (24), entre le dispositif d'alimentation (3) et la tête de chargement (5).

9. Dispositif (100) selon l'une quelconque des revendications précédentes, dans lequel le dispositif de déplacement (4) comprend un mécanisme de levage (25) avec au moins une poulie à câble (26) et au moins un moteur de levage (27).

10. Dispositif (100) selon l'une quelconque des revendications précédentes, dans lequel le dispositif de déplacement (4) comprend un dispositif de freinage (29).

11. Dispositif (100) selon l'une quelconque des revendications précédentes, dans lequel la tête de chargement (5) comprend un dispositif distributeur (30) pour produire au moins une image de couches (302, 303) prédéterminée.

12. Dispositif (100) selon l'une quelconque des revendications précédentes, dans lequel le dispositif d'alimentation (3) comprend au moins une courroie d'alimentation (32) et dans lequel un dispositif de transfert (33) pour des sacs (2) amenés est associé au dispositif d'alimentation (3).

13. Dispositif (100) selon l'une quelconque des revendications précédentes, dans lequel le dispositif tampon de transport (6) comprend une section de transport (8) avec au moins une courroie transporteuse (35), au moins une section tampon (36) et au moins un transporteur d'attribution, et/ou dans lequel le dispositif tampon de transport (6) comprend au moins une section de découplage (34), et/ou dans lequel la tête de chargement (5) est réglable en hauteur entre une position de maintenance supérieure (38), une position de maintenance inférieure (39) et au moins une pluralité de positions de chargement (40) différentes en hauteur.

14. Dispositif (100) selon l'une quelconque des revendications précédentes, dans lequel le dispositif d'alimentation (3) est relié au dispositif de déplacement (4), dans la direction longitudinale (11), via un dispositif de jonction (111) ayant deux composants de jonction télescopiques, de sorte que le dispositif d'alimentation (3) et le dispositif de déplacement (4) sont disposés l'un par rapport à l'autre à distance variable (102), et dans lequel, en particulier, des forces verticales dirigées vers le haut sont réparties par ledit dispositif de jonction (111) sur le dispositif d'alimentation (3) et le dispositif de déplacement (4).
